# EUROPÄISCHE PATENTANMELDUNG

(11) **EP 2 626 035 A1**
(43) Veröffentlichungstag der Anmeldung: **14.08.2013**
(21) Anmeldenummer: 12185561.3
(22) Anmeldetag: 21.09.2012
(51) Int. Cl.: A61C 8/00, A61C 13/265

(54) **Vorrichtungen und Verfahren zur Verbindung einer dentalen Prothesenkonstruktion mit einem Kieferknochen**

(30) Priorität: 07.02.2012 EP 12154311
(71) Anmelder: Fischler, Titus, 4314 Zeiningen (CH)
(72) Erfinder: Fischler, Titus, 4314 Zeiningen (CH)
(74) Vertreter: Latscha Schöllhorn Partner

(57) **Zusammenfassung**

Eine Patrize (2) zur reversibel lösbaren Verbindung einer dentalen Prothesenkonstruktion mit einem Kieferknochen, welche Patrize (2) mit einer Befestigungsstruktur ausgebildet ist, über die die Patrize (2) am Kieferknochen, an einem im Kieferknochen eingepflanzten Implantat, an einem Zahnstumpf oder an einem Nachbarzahn befestigbar ist, umfasst einen Körperabschnitt (12) mit einer einer Mantelfläche eines Zylinders entsprechenden Aussenfläche, wobei die Mittelachse des Zylinders eine Längsachse (19) der Patrize (2) definiert; einen in Bezug auf die Längsachse (19) der Patrize (2) zum Körperabschnitt (12) axial versetzten Einschnappabschnitt (11), der eine konvex gekrümmte Aussenfläche umfasst, die die Aussenfläche des Körperabschnitts (12) von der Längsachse (19) der Patrize (2) aus nach aussen überragt; und ein die Patrize (2) in Bezug auf seine Längsachse (19) axial abschliessendes Kopfende (13). Der Einschnappabschnitt (11) ist näher beim Kopfende (13) angeordnet als der Körperabschnitt (12) und zwischen der konvex gekrümmten Aussenfläche des Einschnappabschnitts (11) und dem Kopfende (13) ist ein konkaver Zwischenabschnitt (18) angeordnet.

## Beschreibung

### Technisches Gebiet

Die Erfindung betrifft eine Patrize gemäss Oberbegriff des unabhängigen Anspruchs 1 sowie ein Abutment mit einer solchen Patrize, einen Retentionseinsatz zum Aufschnappen auf eine solche Patrize und eine entsprechende Verbindungseinrichtung.

Eine solche Patrize, die mit einer Befestigungsstruktur ausgebildet ist, über die die Patrize an einem Kieferknochen, an einem im Kieferknochen eingepflanzten Implantat, an einem Zahnstumpf oder an einem Nachbarzahn befestigbar ist, und die einen Körperabschnitt mit einer im Wesentlichen einer Mantelfläche eines Zylinders entsprechenden Außenfläche, wobei die Mittelachse des Zylinders eine Längsachse der Patrize definiert, einen in Bezug auf die Längsachse der Patrize zum Körperabschnitt axial versetzten Einschnappabschnitt, der eine konvex gekrümmte Aussenfläche umfasst, die die Aussenfläche des Körperabschnitts von der Längsachse der Patrize aus nach aussen überragt, und ein die Patrize in Bezug auf seine Längsachse axial abschliessendes Kopfende, wobei der Einschnappabschnitt näher beim Kopfende angeordnet ist als der Körperabschnitt, umfasst, kann zur reversibel lösbaren Verbindung einer dentalen Prothesenkonstruktion mit einem Kieferknochen eingesetzt werden.

### Stand der Technik

In der Zahnmedizin werden heute regelmässig beschädigte beziehungsweise kranke Zähne durch einen künstlichen Zahnersatz ersetzt. Dabei werden häufig Implantate als Zahnwurzelersatz in einen Kieferknochen eines Patienten eingepflanzt, wobei in gewissen Ausführungen ein Abutment auf das Implantat aufgesetzt wird. Das Implantat beziehungsweise das Abutment ist dabei an seinem dem Kieferknochen abgewandten Längsende also seinem okklusalen Ende mit einer Verbindungsstruktur ausgestaltet, an der eine Prothesenkonstruktion lösbar montiert werden kann.

In einer verbreiteten Ausführung ist diese Verbindung zwischen Abutment und Prothesenstruktur als Druckknopfverbindung ausgestaltet, wobei typischerweise ein männliches Teil der Druckknopfverbindung also die Patrize am Abutment beziehungsweise Implantat ausgestaltet ist und ein weibliches Teil der Druckknopfverbindung also die Matrize mit der Prothesenkonstruktion verbunden ist. Mit solchen Druckknopfsystemen kann die Prothesenkonstruktion bequem auf die zugehörigen Implantate beziehungsweise Abutments aufgeschnappt und auch wieder entfernt beziehungsweise gelöst werden.

In der WO 2010/025034 A1 ist beispielsweise eine dentale Verankerungsvorrichtung beschrieben, die einen am Abutment oder direkt am Implantat ausgestalteten Patrizenkopf umfasst sowie ein Matrizengehäuse, das mit der Prothesenkonstruktion fest verbunden wird. Die Matrize umfasst weiter einen Retentionseinsatz, der in das Matrizengehäuse eingesetzt wird, bevor die Matrize zusammen mit der Prothesenkonstruktion auf den Patrizenkopf aufgeschnappt wird. Der Patrizenkopf weist ein flaches Kopfende und eine konvex nach aussen gekrümmte Aussenfläche als Einschnappfläche auf. Im flachen Kopfende ist eine Öffnung mit einem Innenprofil in den Patrizenkopf eingelassen, durch die einerseits ein Schraubwerkzeug zum Schrauben des Abutments beziehungsweise des Implantats angreifen kann und andererseits ein Stempel beziehungsweise Stopfen des Retentionseinsatzes klemmen kann.

Ein anderes Druckknopfverbindungssystem ist in der WO 2011/027229 A2 beschrieben. Dabei ist insbesondere die Matrize unter anderem so weitergebildet, dass der Retentionseinsatz über einen Verriegelungsmechanismus fest mit dem Matrizengehäuse verbunden ist, wenn die Matrize auf die Patrize aufgeschnappt ist.

Da die Retentionseinsätze bei diesen Druckknopfsystemen nur innerhalb eines beschränkten Winkelbereichs auf der Patrize kippbar sind, kann ein Nachteil darin bestehen, dass auf die Patrize aufgeschnappte Prothesenkonstruktion entsprechend nur in einem zu eingeschränkten Umfang auf der Patrize kippbar sind. Häufig wird jedoch in Anwendung von Druckknopfsystemen eine verbesserte Kippbarkeit der Prothesenkonstruktion angestrebt.

Diesbezüglich verbesserte Eigenschaften bieten typischerweise Druckknopfsysteme mit kugelförmigen Patrizen. Beispielsweise beschreibt die US 5,211,561 A ein solches Druckknopfsystem, das eine Patrize mit einem kugelförmigen Kopf aufweist. Solche kugelförmigen Patrizen können jedoch beim festen Verbinden der Matrize beziehungsweise des Matrizengehäuses mit der Prothesenkonstruktion erhebliche Schwierigkeiten bereiten.

Bei diesem Prozess werden typischerweise erst Retentionseinsätze mit einem zugehörigen Matrizengehäuse zusammen auf die Patrizen von eingebauten Implantaten beziehungsweise Abutments ausgesetzt Danach wird die Prothesenkonstruktion so auf die Matrizengehäuse aufgesetzt, dass jedes Gehäuse in einer Aussparung der Prothesenkonstruktion liegt, wo es dann beispielsweise durch Auspolymerisierung der Aussparung fest mit der Prothesenkonstruktion verbunden wird.

Durch die verhältnismässig gute beziehungsweise leichte Kippbarkeit der Retentionseinsätze und der Matrizengehäuse auf der Patrize beziehungsweise durch die verhältnismässig instabile Anordnung der Retentionseinsätze und der Matrizengehäuse auf den kugelförmigen Patrizen, ist es jedoch schwierig während dem Verbinden der Matrizengehäuse mit der Prothesenkonstruktion sicher zu stellen, dass die Retentionseinsätze und die Matrizengehäuse alle genau gerade axial auf der Patrize angeordnet sind. Häufig kann dies nicht ausreichend gewährleistet werden, was dazu führen kann, dass die Matrizengehäuse in Bezug auf die Patrizen leicht verkippt beziehungsweise geneigt mit der Prothesenkonstruktion verbunden werden, wodurch sich die Prothesenkonstruktion dann nicht mehr optimal aufschnappen lässt und/oder nicht mehr optimalen Bewegungsspielraum auf den Implantaten aufweist.

Aufgabe der nachfolgenden Erfindung ist es daher, eine Konstruktion vorzuschlagen, die einerseits eine verhältnismässig gute Kippbarkeit der Matrize(n) einer Prothesenkonstruktion ermöglicht und andererseits auf verhältnismässig einfache effiziente Weise eine verhältnismässig genaue Positionierung der Matrize(n) auf entsprechenden Patrizen und somit eine exakte bestimmungsgemässe Herstellung der Prothesenkonstruktion ermöglicht.

### Darstellung der Erfindung

Diese Aufgabe wird erfindungsgemäss durch eine Patrize gelöst, wie sie im unabhängigen Anspruch 1 definiert ist. Vorteilhafte Ausführungsvarianten der Erfindung ergeben sich aus den abhängigen Ansprüchen.

Das Wesen der Erfindung besteht im Folgenden: Eine Patrize zur reversibel lösbaren Verbindung einer dentalen Prothesenkonstruktion mit einem Kieferknochen, die mit einer Befestigungsstruktur ausgebildet ist, über die die Patrize am Kieferknochen, an einem im Kieferknochen eingepflanzten Implantat, an einem Zahnstumpf oder an einem Nachbarzahn befestigbar ist, umfasst einen Körperabschnitt mit einer einer Mantelfläche eines Zylinders entsprechenden Außenfläche, wobei die Mittelachse des Zylinders beziehungsweise des Körperabschnitts eine Längsachse der Patrize definiert. Die Patrize umfasst auch einen in Bezug auf die Längsachse der Patrize zum Körperabschnitt axial versetzten Einschnappabschnit, der eine entlang der Längsachse konvex gekrümmte Aussenfläche umfasst, die die Aussenfläche des Körperabschnitts von der Längsachse der Patrize aus nach aussen beziehungsweise distal überragt. Weiter umfasst die Patrize ein die Patrize in Bezug auf seine Längsachse axial abschliessendes Kopfende. Bei der erfindungsgemässen Patrize ist der Einschnappabschnitt näher beim Kopfende angeordnet als der Körperabschnitt und zwischen der konvex gekrümmten Außenfläche des Einschnappabschnitts und den Kopfende ist ein konkaver Zwischenabschnitt angeordnet.

Unter dem Begriff "Patrize" im Sinne der Erfindung kann eine Vorrichtung verstanden werden, die im Betrieb am Kieferknochen befestigt wird und auf der eine mit einer Prothesenkonstruktion fest verbundene Matrize montiert und demontiert werden kann. Dazu kann die Patrize ein männliches Teil einer druckknopfähnlichen Verbindungsstruktur bereit zu stellen. Beispielsweise kann die Patrize als einteiliges Implantat mit einer ein Außengewinde aufweisenden Befestigungsstruktur, über welches das Implantat in den Kieferknochen eingeschraubt und eingepflanzt werden kann, als Abutment mit einer passend zu einer entsprechenden Struktur des Implantats ausgestalteten Befestigungsstruktur zur Montage auf einem Implantat, als Abutmentabdeckung zum Aufsetzen auf ein Abutment, als Brückenkonstruktion, als Zahnwurzelstift oder als eine Zahnstumpfkappe ausgestaltet sein. Die Patrize kann auch Teil einer der vorgenannten Vorrichtungen oder einer ähnlichen Vorrichtung sein. Unter dem Begriff "reversibel lösbares Verbinden" kann im Zusammenhang mit der Patrize eine Verbindung zur Montage beziehungsweise zum Einsetzen einer Prothesenkonstruktion im Mundraum eines Patienten verstanden werden. Dabei soll das Verbinden insofern reversibel also wiederholt lösbar sein, dass die Prothesenkonstruktion eingesetzt und wieder entfernt werden kann. Insbesondere kann dies mittels einer Druckknopfverbindung realisiert sein, bei der die Prothesenkonstruktion zum Einsetzen auf die Patrize aufgeschnappt und zum Entfernen wieder davon abgezogen wird.

Im Zusammenhang mit der Erfindung können unter dem Begriff "konvex" in Bezug auf die Patrize beziehungsweise benannter Teile derselben nach aussen gekrümmte, nach aussen geknickte, nach aussen gewölbte, nach aussen gestülpte oder ähnliche Ausgestaltungen verstanden werden. Unter dem Begriff "entlang der Längsachse konvex gekrümmt" bezieht sich in Bezug auf die Aussenfläche des Einschnappabschnitts auf eine Krümmung in Richtung der Längsachse, das heisst auf eine Krümmung in einer die Längsachse umfassenden Schnittebene. Analog dazu können im gleichen Zusammenhang unter dem Begriff "konkav" in Bezug auf die Patrize beziehungsweise benannter Teile derselben nach innen gekrümmte, nach innen geknickte, nach innen gewölbte, nach innen gestülpte oder ähnliche Ausgestaltungen verstanden werden. Unter dem Begriff "Prothesenkonstruktion" werden im Zusammenhang mit der Erfindung verschiedene je nach Einsatz geeignete Konstruktionen verstanden, wie sie beispielsweise als Einzel-, Teil- oder Ganzzahnersatz, Brücke, Krone, Hybrid- oder Vollprothese bekannt sind.

Die Patrize und insbesondere ihr Kopfende, ihr Einschnappabschnitt und ihr Zwischenabschnitt können auch im Wesentlichen rotationssymmetrisch ausgestaltet sein. Sie kann je nach Ausgestaltung und Einsatzgebiet aus entsprechend geeigneten Materialien hergestellt sein, wobei beispielsweise Titan, Zirkonoxid, Polyaryletherketone (PAEK), Polyetheretherketon (PEEK), Polyetherketonketon (PEKK) oder für medizinische Applikationen optimierte Abwandlungen davon eingesetzt werden kann. Typischerweise kann eine solche Patrize den Zweck erfüllen, auf einer Seite einen passgenauen Anschluss an den Kieferknochen des Patienten zu gewährleisten und auf der anderen Seite Mittel bereit zu stellen, an denen die Prothesenkonstruktion sicher befestigt werden kann. Der Einschnappabschnitt der erfindungsgemässen Patrize ermöglicht dabei, eine lösbare Druckknopfverbindung zwischen der Patrize und der Prothesenkonstruktion bereitzustellen.

In Anwendung der erfindungsgemässen Patrize kann bei der Herstellung einer Prothesenkonstruktion die Patrize beziehungsweise mehrere solche Patrizen mit einem Kieferknochen verbunden werden. Dies kann je nach Ausgestaltung der Patrize über eine direkte Verbindung mit dem Kieferknochen oder über eine indirekte Verbindung mit dem Kieferknochen beispielsweise als Abutment über ein Implantat, als Abutmentabdeckung über ein Abutment und ein Implantat oder über einen Zahnstumpf erfolgen.

Parallel dazu kann die Prothesenkonstruktion so vorbereitet sein, dass Öffnungen beziehungsweise Sacklöcher beziehungsweise Aussparungen an der oder den Stellen der Prothesenkonstruktion vorgesehen sind, an denen die Prothesenkonstruktion mittels einer oder mehrerer Matrizen mit der oder den Patrize(n) verbindbar sein soll. Auf die Patrizen können dann Retentionseinsätze und passende Matrizengehäuse aufgesetzt werden. Dabei ermöglicht die erfindungsgemässe Geometrie der Patrizen insbesondere mit ihren konkaven Zwischenabschnitten, dass die Retentionseinsätze in vorbestimmter Ausrichtung ausreichend auf den Patrizen gehalten werden können und dass ein unbeabsichtigtes Verkippen der Retentionseinsätze auf den Patrizen vermieden werden kann. Die erfindungsgemässe Patrize kann durch die Ausgestaltung seines Kopfs eine Eigenzentherfunktion auf die Matrize beziehungsweise deren Retentionseinsatz ausüben. Insbesondere kann durch die Form des Kopfs der Patrize der Retentionseinsatz bei einer Verkippung leicht vorgespannt werden, so dass er automatisch wieder in die erwähnte bevorzugte vorbestimmte Ausrichtung beziehungsweise Position bewegt wird, sobald er den notwendigen Freiraum dazu erhält. In dieser bevorzugten vorbestimmten Ausrichtung beziehungsweise Position können die Patrizen dann in den Öffnungen der Prothesenkonstruktion angeordnet werden und die Matrizengehäuse können beispielsweise über Auspolymerisierung der Öffnungen fest mit der Prothesenkonstruktion verbunden werden.

Im täglichen Gebrauch der erfindungsgemässen Patrize beziehungsweise der damit verbindbaren Prothesenkonstruktion kann - wie unten in einer bevorzugten Ausführung detaillierter beschrieben - das Kopfende der Patrize so ausgestaltet sein, dass es zusammen mit dem Einschnappabschnitt ein verhältnismässig starkes Kippen der Matrize auf der Patrize ermöglicht, was in verschiedener Hinsicht erstrebenswert beziehungsweise komfortabel sein kann. Auch ermöglicht die Form seines Kopfendes, dass beim Aufsetzen die an der Prothesenkonstruktion montierte Matrize einfach und auf verhältnismässig sanfte Weise genau positioniert werden kann, so dass ein komfortables Einsetzen der Prothesenkonstruktion möglich ist und beispielsweise durch Ecken oder Kanten des Kopfendes verursachte Beschädigungen an der Matrize vermieden werden können.

Auch ermöglicht die erfindungsgemässe Ausgestaltung der Patrize, dass das Kopfende verhältnismässig weit axial beabstandet von der dem Körperabschnitts entgegengesetzten Seite des Einschnappabschnits angeordnet ist. Dadurch kann das Kopfende der Patrize im Vergleich zu seinem Einschnappabschnitt erhöht liegen, das heisst es erstreckt sich weiter in den Mundinnenraum hinein als der Einschnappabschnitt. Auf diese Weise kann sich das Kopfende im Vergleich zum Einschnappabschnitt weiter vom Zahnfleisch abheben, so dass sich die Patrize vor einem Einsetzen der Prothesenkonstruktion verhältnismässig leicht und eindeutig lokalisieren lässt, Wie auch weiter unten in bevorzugter Ausführung detaillierter gezeigt, kann durch eine gleichzeitig angepaßte Ausgestaltung anderer Bestandteils der Suprastruktur insbesondere des Retentionseinsatzes verhindert werten, die Suprastruktur unzweckmäßig hoch ist.

Die Geometrie der erfindungsgemässen Patrize ermöglicht also, dass die Matrize zum einen in einer Ausgangsstellung beziehungsweise in einer vorbestimmten Ausrichtung und Position leicht gehalten beziehungsweise zentriert werden kann, so dass die Prothesenkonstruktion auf verhältnismässig einfache Weise präzise und bestimmungsgemäss mit der Matrize versehen werden kann. Zum anderen ermöglicht die Patrize auch, dass die Prothesenkonstruktion verhältnismässig stark verkippt werden kann, ohne die Patrize aus der Matrize ausklickt, was insbesondere bei über zwei Patrizen am Kieferknochen befestigten Prothesenkonstruktionen von Bedeutung sein kann. Zudem kann die Prothesenkonstruktion mittels der erfindungsgemässen Patrize auch verhältnismässig leicht und effizient im Mund eines Patienten eingesetzt werden.

Vorzugsweise weist der Zwischenabschnitt der erfindungsgemässen Patrize eine konkav gekrümmte Außenfläche auf. Eine solche Ausgestaltung der Patrize ermöglicht eine bevorzugte ausreichend leichte Halterung der Matrize in einer vorbestimmten Ausrichtung beziehungsweise Position. Zudem ermöglicht diese so gekrümmte Aussenfläche ein sanftes komfortables Zentrieren und Aufsetzen einer Matrize.

Vorzugsweise ist das Kopfende der Patrize vollständig konvex gekrümmt und geschlossen ausgestaltet ist. In diesem Zusammenhang bezieht sich der Begriff "geschlossen" darauf, dass die Oberfläche des Kopfendes keine Öffnungen aufweist, die nicht durch Eigenschaften des verwendeten Materials wie beispielsweise durch die Porosität bedingt sind. Insbesondere wird darunter verstanden, dass das Kopfende keine Öffnung zum Einbringen eines Werkzeugs oder eines Retentionsstopfens oder zu einem ähnlichen Zweck aufweist. Eine solche Ausgestaltung des Kopfendes ermöglicht, dass das Aufsetzen einer passenden Matrize und insbesondere deren Retentionseinsatzes verhältnismässig einfach verläuft. Insbesondere kann über die Krümmung des Kopfendes die Matrize präzise eingemittet und positioniert werden, indem die Matrize entlang der Krümmung gleitet bis sie zentriert auf der Patrize beziehungsweise auf dem Einschnappabschnitt des Abutments liegt, so dass ein komfortables Aufdrücken und Aufschnappen der Matrize auf den Einschnappabschnit der Patrize möglich ist. Dabei kann über die gekrümmte Ausgestaltung des Kopfendes auch eine Beschädigung der Matrize vermieden werden. Zudem ermöglicht eine solche geschlossene Ausgestaltung des Kopfendes eine Verbesserung der Hygiene, da kein Einschluss von Speiseresten oder anderen Verunreinigung in Öffnungen möglich ist.

Das Kopfende des Abutments entspricht dabei vorzugsweise im Wesentlichen einem Segment einer Kugelfläche. Damit kann das Kopfende auf verhäitnismässig einfache Weise bevorzugt konvex gekrümmt ausgestaltet sein.

Das Segment der Kugelfläche des Kopfendes weist dabei vorzugsweise einen ersten Krümmungsradius auf und die konvex gekrümmten Aussenfläche des Einschnappabschnitts einen zweiten Krümmungsradius, wobei der erste Krümmungsradius grösser ist als der zweite Krümmungsradius. Eine solche Ausgestaltung der Patrize ermöglicht einerseits ein effizientes zweckmässiges Einschnappen einer Matrize am Einschnappabschnitt, so dass die Matrize ausreichend an der Patrize gehalten werden kann. Andererseits ermöglicht die weichere Rundung des Kopfendes, dass die Matrize verhältnismässig stark auf der Patrize gekippt werden kann, ohne dass sie ausklickt. In einer bevorzugten Ausführung ist dabei der erste Krümmungsradius etwa zwei bis etwa vier Mal grösser als der zweite Krümmungsradius und insbesondere etwa drei Mal grösser. Der Begriff "etwa" im Zusammenhang mit den Grössenverhältnissen des ersten Krümmungsradius und des zweiten Krümmungsradius kann sich auf einen Wert beziehen, der innerhalb 20%, innerhalb 10%, innerhalb 5% oder innerhalb 2% gegebenen liegt Zudem kann sich der Begriff "etwa" insbesondere auch genau auf den angegebenen Wert beziehen.

Ein weiterer Aspekt der Erfindung bezieht sich auf ein Abutment zur Verbindung dentalen Prothesenkonstruktion mit einem Kieferknochen als eine Ausführung der erfindungsgemässen Patrize. Das Abutment umfasst eine Patrize wie oben beschrieben und eine Befestigungsstruktur, über die das Abutment am Kieferknochen oder an einem im Kieferknochen eingepflanzten Implantat befestigbar ist. Unter dem Begriff "Abutment" wird im Zusammenhang mit der vorliegenden Erfindung eine Verbindungskonstruktion beziehungsweise ein Verbindungsstück beziehungsweise ein Pfosten verstanden, die beziehungsweise das beziehungsweise der Mittel aufweist, über die eine Prothesenkonstruktion befestigt werden kann, so dass bei bestimmungsgemäßem Einsatz des Abutments die Prothesenkonstruktion über das Abutment in einem Mund eines Patienten am Kieferknochen montiert werden kann. Solche Abutments können als einteilige Konstruktion mit einem Implantatkörper versehen sein, über den es direkt mit einem Kieferknochen des Patienten verbunden werden kann. Beispielsweise kann dabei der Implantatkörper ein Außengewinde als Befestigungsstruktur aufweisen, über welches das Abutment in den Kieferknochen eingeschraubt und eingepflanzt werden kann. Alternativ dazu kann das Abutment auch dazu ausgestaltet sein, an einem gesonderten Implantat befestigt zu werden, so dass Implantat und Abutment zweiteilig ausgestaltet sind. Dabei ist die Befestigungsstruktur des Abutments vorzugsweise passend zu einer entsprechenden Struktur des Implantats ausgestaltet, so dass es effizient damit verbunden werden kann. Die Befestigungsstruktur kann auf geeignete Weise auf bekannte Art ausgestaltet sein. Typischerweise kann ein solches Abutment den Zweck erfüllen, auf einer Seite einen passgenauen Anschluss an ein im Kieferknochen des Patienten eingepflanztes Implantat zu gewährleisten und auf der anderen Seite Mittel bereit zu steifen, an denen die Prothesenkonstruktion sicher befestigt werden kann.

Die Teile der gesamten Prothesen- und Implantateinrichtung, die in einem Einsatz die Gingiva beziehungsweise das Zahnfleisch zum Mundraum hin überragen und somit von außen sichtbar sind, können als "Suprastruktur" bezeichnet werden. Beispielsweise kann die Suprastruktur die Prothesenkonstruktion, eine eine Halteschale beziehungsweise ein Gehäuse und einen Retentionseinsatz umfassende Verbindungsvorrichtung (Matrize) sowie insbesondere bei der erwähnten zweiteiligen Ausführung des Abutments das Abutment selbst oder zumindest Teile davon wie dessen Patrize umfassen.

In gewissen Ausführungsformen des Abutments kann der Körperabschnitt der Patrize auch gebogen beziehungsweise geknickt ausgestaltet sein. In einem solchen Fall entspricht seine Außenfläche im Wesentlichen einer Mantelfläche eines gebogenen beziehungsweise geknickten Zylinders, wobei die Mittelachse dieses gebogenen beziehungsweise geknickten Kreiszylinders an seinem dem Kopfende des Abutments zugewandten Ende die Längsachse des Abutments definiert.

Die erfindungsgemässe Ausgestaltung des Abutments ermöglicht, dass die oben im Zusammenhang mit der Patrize erwähnten Effekte und Vorteile mit dem Abutment verwirklicht werden können.

Vorzugsweise weist die Befestigungsstruktur des Abutments einen sich vom Kopfende der Patrize weg erstreckenden Schraubenabschnitt auf, an dem zumindest teilweise ein Außengewinde ausgebildet ist. Eine solche Befestigungsstruktur ermöglicht, dass das Abutment zur Befestigung beispielsweise über ein korrespondierendes Innengewinde eines Implantats verschraubt werden kann. Auch kann die Befestigungsstruktur mit dem das Außengewinde aufweisenden Schraubenabschnit dazu ausgestaltet sein, direkt in einen Kieferknochen eingeschraubt zu werden. Zum Verschrauben kann beispielsweise ein dazu angepasstes Schraubwerkzeug verwendet werden. Ein solches Aussengewinde ermöglicht also eine einfache effiziente Befestigung des Abutments.

Dabei umfasst die Befestigungsstruktur vorzugsweise einen zwischen dem Schraubenabschnitt und der Patrize angeordneten Schlüsselansetzabschnitt. Der Schlüsselansetzabschnitt kann als Zylinder ausgestaltet sein, dessen Mantelfläche einen im Wesentlichen als Vieleck ausgestalteten Querschnitt aufweist. Dadurch oder auf andere Weise kann der Schlüsselansetzabschnih vorzugsweise zylindrisch ausgestaltet sein, wobei an der Mantelfläche vorzugsweise vier, fünf, sechs oder acht ebene Angreifflächen entlang des Umfangs der Mantelfläche angeordnet sind. Die beispielsweise im Wesentlichen rechteckigen Angreifflächen der Außenfläche des Schlüsselansetzabschnitts ermöglichen, dass das Abutment zum Ein- und Ausdrehen beziehungsweise -schrauben von außen her gegriffen werden kann. Insbesondere kann dies wie erwähnt durch ein spezifisch angepaßtes Schraubwerkzeug erfolgen. Der erwähnte Querschnitt des Zylinders der Mantelfläche kann im Wesentlichen die Form eines Quadrats, eines Hexagons oder eines Oktagons aufweisen. Eine solche Ausgestaltung als Vierkant-, als Hexagon- oder Oktagonzylinder ermöglicht eine verhältnismässig einfache Anordnung, wobei gewährleistet werden kann, die Angreifflächen so ausgestaltet sind, dass zum Schrauben des Abutments geeignete Kräfte über sie auf das Abutment übertragen werden können.

Das Abutment kann einen im Wesentlichen zylindrischen Gingivahöhenabschnitt umfassen, der die Patrize von einer Längsachse des Abutments aus nach aussen überragt. Mit einem solchen Gingivahöhenabschnitt kann die Höhe des Abutments so angepasst sein, dass die Patrize im Wesentlichen oberhalb der Gingiva liegen, so dass sie von einer Mundhöhle her zugänglich sind, wenn das Abutment mit dem Kieferknochen verbunden ist. Die Höhe des Gingivahöhenabschnitts kann in einem Bereich von etwa 0.5 mm bis etwa 8 mm, vorzugsweise in einem Bereich von etwa 1 mm bis 6 mm und insbesondere in einem Bereich von 1.5 mm bis 5.5 mm liegen.

Der Gingivahöhenabschnitt kann den Schraubenabschnitt der Befestigungsstruktur von der Längsachse des Abutments aus nach außen überragen, wobei ein Anschlag zwischen dem Gingivahöhenabschnitt und dem Schraubenabschnitt der Befestigungsstruktur ausgestaltet sein kann. Ein solcher Anschlag ermöglicht, das das Abutment bündig an einem zugehörigen Implantat anliegt, wenn es damit verbunden ist. Beispielsweise kann damit eine verhältnismässig gleichmässige breitflächige Kraftübertragung vom Abutment auf das Implantat und in die Gegenrichtung erreicht werden. Dabei ist der Anschlag zwischen dem Körperabschnitt und dem Schraubenabschnit der Befestigungsstruktur vorzugsweise als eine im Wesentlichen rechtwinklig zur Längsachse angeordnete im Wesentlichen ebene Fläche ausgestaltet.

Der Schraubenabschnitt der Befestigungsstruktur des Abutments kann einen Zwischenabschnitt ohne Außengewinde und einen Gewindeabschnit mit Aussengewinde aufweisen. Dabei kann sich der Zwischenabschnitt des Schraubenabschnitts der Befestigungsstruktur vom Gingivahöhenabschnitt zum Gewindeabschnitt verjüngen. Der Zwischenabschnitt kann dabei mindestens eine Stufe aufweisen. Die Stufen, mit denen sich der Zwischenabschnit auch verjüngt, können kantig, gekrümmt, parabolisch oder ähnlich ausgestaltet sein. Mit solchen Stufen in Längsrichtung des Abutments können Kräfte, die entlang der Längsachse des Abutments wirken, an mehreren Stellen beispielsweise auf ein zugehöriges Implantat übertragen werden. Damit kann beispielsweise bei einer Krafteinwirkung beziehungsweise einer Bissbewegung eine vorteilhaft Kraftverteilung auf das Abutment und/oder das Implantat erreicht werden. Zudem können solche Stufen auch beim Befestigen des Abutments beispielsweise zur Kraftverteilung hilfreich sein.

Ein maximaler senkrecht zur Längsachse des Abutments liegender Querschnitt des Einschnappabschnits der Patrize kann einen Durchmesser von etwa 2.1 mm bis etwa 2.7 mm und insbesondere etwa 2.3 mm aufweisen. Ein so dimensionierter Einschnappabschnitt ermöglicht eine verhältnismässig kleine Druckknopfverbindung, was bei vielen Prothesenkonstruktionen beziehungsweise Anwendungen eine erhöhte Flexibilität und einen verbesserten Komfort ermöglichen kann. Zum Vergleich liegen entsprechende Durchmesser herkömmlicher Druckknopfverbindungen in einem Bereich von etwa 3.8 mm bis etwa 4 mm. Gemäss dieser Dimensionierung des Einschnappabschnitts des Abutments kann der Durchmesser also um etwa 30 % bis etwa 40 % reduziert Werden. Insbesondere zusammen mit einem erfindungsgemässen Retentionseinsatz können trotz der vorzugsweisen kleineren Dimensionierung des Einschnappabschnitts ausreichende Halte- beziehungsweise Abzugs- beziehungsweise Retentionskräfte gewähneistet werden. Zudem ermöglicht die bevorzugte konvex gekrümmte Ausgestaltung des Kopfendes des Abutments ein einfaches sauberes Aufsetzen der Prothesenkonstruktion auf das Abutment auch bei verhältnismässig kleinen solchen Einschnappabschnitten.

Ein weiterer anderer Aspekt der Erfindung betrifft einen Retentionseinsatz zum Aufschnappen auf einen Einschnappabschnitt einer Patrize wie oben beschrieben. Der Retentionseinsatz weist eine Endseite und einen davon abstehenden zumindest teilweise ringförmigen Retentionsrand auf, wobei die Endseite und der davon abstehende Retentionsrand eine Fassung bilden, die einen korrespondierend zur Aussenfläche des Einschnappabschnitts der Patrize ausgestalteten konkaven ersten Bereich, einen zur Aufnahme des Kopfendes der Patrize ausgestalteten zweiten Bereich und einen zwischen dem ersten Bereich und dem zweiten Bereich ausgestalteten dritten Bereich umfasst. Im Zusammenhang mit dem Retentionseinsatz können unter dem Begriff "konkav" in Bezug auf den Körper des Retentionseinsatzes beziehungsweise benannter Teile desselben nach innen gekrümmte, nach innen geknickte, nach innen gewölbte, nach innen gestülpte oder ähnliche Ausgestaltungen verstanden werden.

Ein solcher Retentionseinsatz erlaubt einen universellen Einsatz mit einer erfindungsgemässen Patrize beziehungsweise mit einem erfindungsgemässen Abutment sowie mit einer bekannten Patrize mit einer Öffnung an seinem Kopfende beziehungsweise einem flachen oder ebenen Kopfende. Somit ist möglich, dass mit einer Art von Retentionseinsätzen parallel verschiedene Arten von Patrizen beziehungsweise Abutments versorgt werden, was für den Praktiker eine Erleichterung sein kann. Insbesondere ermöglicht der dritte Bereich des Retentionseinsatzes ein Abstützen an beziehungsweise eine Auflage auf eine solche herkömmliche Patrize. Der zweite Bereich der Fassung des Retentionseinsatzes kann dabei leer bleiben.

Bei einem Einsatz des Retentionseinsatzes zusammen mit einer Patrize beziehungsweise einem Abutment wir oben beschrieben, ermöglichen der erste, zweite und dritte Bereich zudem, dass eine den Retentionseinsatz umfassende Matrize in einem bevorzugten Ausmass auf der Patrize gekippt werden kann, ohne dass die Matrize von der Patrize abgelöst wird. Gleichzeitig ermöglicht der Retentionseinsatz, dass er bei einer Verkippung auf der Matrize vorgespannt wird, so dass er von selbst wieder in seine unverkippte Ausgangsposition beziehungsweise -stellung bewegt wird, wenn keine äussere Kippkraft mehr auf ihn wirkt. Damit kann eine Eigenzentrierfunktion imptementiert sein, die wie oben beschrieben eine Erleichterung bei der Herstellung einer Prothesenkonstruktion darstellen kann. Zum Vorspannen des Retentionseinsatzes kann dieser beispielsweise elastisch deformiert beziehungsweise gebogen werden.

Vorzugsweise ist der zweite Bereich der Fassung des Retentionseinsatzes als durchgehende Öffnung in der Endseite ausgestaltet. Die Öffnung kann dabei insbesondere einen runden beziehungsweise kreisförmigen Querschnitt aufweisen. Ein solcher zweiter Bereich ermöglicht eine verhältnismässig einfache effizient Ausgestaltung des erfindungsgemässen Retentionseinsatzes.

Vorzugsweise weist der dritte Bereich der Fassung eine konische Innenfläche aufweist, die sich vom ersten Bereich der Fassung zum zweiten Bereich der Fassung hin verjüngt. Ein solcher dritter Bereich erlaubt eine effiziente Herstellung des Rententionseinsatzes und ermöglicht die angestrebte vorteilhafte Wirkung insbesondere auch bezüglich Vorspannbarkeit.

Vorzugsweise weist der Retentionsrand einen Verlängerungsbereich auf, der entgegen dem dritten Bereich der Fassung an den ersten Bereich der Fassung anschliesst, Dabei kann der Verlängerungsbereich insbesondere eine Innenseite aufweisen, die im Wesentlichen der Innenseite eines Rings entspricht und eben ausgestaltet ist. Ein solcher Verlängerungsbereich ermöglicht, dass der Retentionseinsatz in einem vergrößerten Ausmass auf einer Patrize verkippt werden kann. Insbesondere kann damit die entsprechende vorteilhafte Wirkung der Patrize beziehungsweise des Abutments unterstützt und verbessert realisiert sein. Dabei umfasst der Retentionseinsatz vorzugsweise eine Mittellängsachse, wobei ein Durchmesser eines maximalen senkrecht zur Mittellängsachse angeordneten Querschnitts des ersten Bereichs eine Länge von zwischen etwa sechs bis etwa vierzehn, vorzugsweise zwischen etwa acht bis etwa zwölf und insbesondere etwa zehn Mal der Mächtigkeit des Verlängerungsbereichs aufweist.

Der Begriff "etwa" im Zusammenhang mit der Länge des Durchmessers des Querschnitts des ersten Bereichs kann sich auf Wert beziehungsweise einen beziehen, der innerhalb 20%, innerhalb 10%, innerhalb 5% oder innerhalb 2% des gegebenen Werts beziehungsweise Bereichs liegt. Zudem kann sich der Begriff "etwa" insbesondere auch genau auf den angegebenen Wert beziehungsweise Bereich beziehen. Der Begriff "im Wesentlichen senkrecht" in Bezug auf die Anordnung des Querschnittes des ersten Bereichs zur Mittelachse kann sich auf einen Winkelwert, der innerhalb 20%, innerhalb 10%, innerhalb 5% oder innerhalb 2% des angegebenen Werts von 90° liegt. Auch kann er sich insbesondere auf eine genau senkrechte Ausgestaltung also einen Winkel von 90° beziehen. Mit diesen Verhältnissen des ersten Bereichs und des Verlängerungsbereichs kann eine bevorzugt effiziente und zweckmässige effindungsgemässe Ausgestaltung des Retentionseinsatzes realisiert sein.

Ein anderer weiterer Aspekt der Erfindung betrifft eine Verbindungseinrichtung, die eine Patrize wie oben beschrieben und einen Retentionseinsatz wie oben beschrieben umfasst. Dabei ist der dritte Bereich des Retentionseinsatzes zumindest teilweise beabstandet vom Zwischenabschnit der Patrize angeordnet ist, wenn der Retentionseinsatz auf die Patrize aufgeschnappt ist und keine äussere Kraft auf den Retentionseinsatz und/oder die Patrize wirken. Unter dem Begriff "äussere Kraft" kann in diesem Zusammenhang eine Kraft verstanden werden, die von aussen wirkt und beispielsweise den Retentionseinsatz auf der Patrize bewegt. Nicht als eine Kraft im vorgenannten Sinne kann insbesondere eine Kraft verstanden werden, die zwischen dem Retentionseinsatz und der Patrize zum Hatten des Retentionseinsatzes auf der Patrize wirkt. Eine solche Verbindungseinrichtung ermöglicht, dass auf verhältnismässig effiziente Weise die oben detaillierter beschriebene Eigenzentrierfunktion erfindungsgemäss implementiert sein kann und gleichzeitig die oben beschriebene bevorzugte Verkippungsmöglichkeit. Unter anderem kann der Abstand zwischen Zwischenabschnitt der Patrize und drittem Bereich des Retentionseinsatzes zulassen, dass der Retentionseinsatz elastisch gebogen und somit vorgespannt werden kann, wenn er auf der Patrize aufgesetzt ist. Zudem ermöglicht eine solche Kombination der erfindungsgemässen Patrize mit dem erfindungsgemässen Retentionseinsatz den Einschnappabschnitt der Patrize verhältnismässig klein zu dimensionieren und dennoch ausreichende Retentionskräfte bereit zu stellen.

Der vorstehend beschriebene Retentionseinsatz sowie der Retentionseinsatz des Verbindungseinrichtung können wie folgt beschrieben weitergebildet sein:

Der Retentionseinsatz kann dazu ausgestaltet sein, so in einer durch einen Halterand und eine Endseite einer Halteschale beziehungsweise eines Matrizengehäuses gebildeten Aufnahme in der Halteschale anordbar zu sein, dass eine Aussenfläche des Retentionsrandes des Retentionseinsatzes benachbart zu einer Innenfläche des Halterandes der Halteschale liegt.

Dabei ist der Retentionseinsatz vorzugsweise so ausgestaltet, dass die Außenfläche des Retentionsrandes des Retentionseinsatzes zumindest teilweise beabstandet benachbart von der Innenfläche des Halterandes der Halteschale angeordnet ist, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken.

Der Retentionseinsatz kann dabei dazu ausgestaltet sein, dass die Aussenfläche des Retentionsrandes des Retentionseinsatzes zumindest teilweise beabstandet benachbart von der Innenfläche des Halterandes der Halteschale angeordnet ist, indem die Aussenfläche des Retentionsrandes des Retentionseinsatzes stärker in Richtung einer zentralen Achse der Verbindungsvorrichtung geneigt ist als die Innenfläche des Halterandes der Halteschale.

Der Retentionsrand kann einen radial von der Aussenfläche des Retentionsrandes abstehenden Vorsprung aufweisen, wobei der Vorsprung einer von der Innenfläche des Halterandes der Halteschale erstreckenden Nut entsprechend ausgestaltet ist. Dabei kann der Vorsprung des Retentionsrandes so in der Nut des Halterandes der Halteschale anordbar sein, der Retentionseinsatz lösbar in der Halteschale gehalten ist, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken. Der Vorsprung des Retentionsrandes des Retentionseinsatzes kann dabei eine im Wesentlichen ebene Vorsprungauflagefläche umfassen, wobei ein Teil der Vorsprungauftagefläche an einem Teil einer im Wesentlichen ebenen Nutauflagefläche der Nut des Halterandes der Halteschale anliegt, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken, und wobei die Vorsprungauflagefläche gegen ihr der Halteschale zugewandten Ende hin abgerundet ausgestaltet ist.

Der Vorsprung des Retentionsrandes kann dazu ausgestaltet sein, so in der Nut des Halterandes der Halteschale anordbar zu sein, dass der Retentionseinsatz unlösbar mit der Halteschale verbunden ist, wenn der Retentionseinsatz in der Aufnahme der Halteschale angeordnet ist und wenn eine radiale Kraft auf den Retentionsrand des Retentionseinsatzes in Richtung des Halterndes der Halteschale und/oder auf den Halterand der Halteschale in Richtung des Retentionsrandes des Retentionseinsatzes wirkt.

Der Retentionsrand des Retentionseinsatzes kann eine der Außenfläche entgegengesetzte Innenfläche aufweisen, wobei die Innenfläche gegen der Endseite des Retentionseinsatzes abgewandte Ende hin abgerundet ausgestaltet ist. Der Retentionseinsatz kann aus einem biokompatibles polymeren Material insbesondere aus einem Polyetheretherketon hergestellt sein.

### Kurze Beschreibung der Zeichnungen

Im Folgenden wird die Erfindung unter Bezugnahme auf die beigefügten Zeichnungen anhand von Ausführungsbeispielen detaillierter beschrieben. Es zeigen:
- Fig. 1: eine Seitenansicht eines ersten Ausführungsbeispiels eines erfindungsgemässen Abutments;
- Fig. 2: eine vergrösserte Seitenansicht der Patrize des Abutments von Fig. 1;
- Fig. 3: eine Aufsicht auf die Patrize des Abutments von Fig. 1;
- Fig. 4: eine perspektivische Ansicht eines ersten Ausführungsbeispiels eines zu dem Abutment von Fig. 1 passenden erfindungsgemässen Retentionseinsatzes;
- Fig. 5: eine Ansicht von unten an den Retentionseinsatz von Fig. 4;
- Fig. 6: eine Querschnittsansicht entlang der Linie A-A des Retentionseinsatzes von Fig. 5;
- Fit. 7: eine Seitenansicht eines zweiten Ausführungsbeispiels eines erfindungsgemässen Abutments;
- Fig. 8: eine Querschnittsansicht entlang der Linie E-E der Patrize des Abutments von Fig. 7;
- Fig. 9: eine Querschnittsansicht eines zu dem Abutment von Fig. 7 passenden zweiten Ausführungsbeispiels eines erfindungsgemässen Retentionseinsatzes; und
- Fig. 10: eine perspektivische Ansicht des Retentionseinsatzes von Fig. 9.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt des Abutments beziehungsweise des Retentionseinsatzes sowie benannter Teile derselben. Die Terminologie umfasst die oben ausdrücklich erwähnten Wörter, Ableitungen von denselben und Wörter ähnlicher Bedeutung.

Zudem gilt für die gesamte nachfolgende Beschreibung folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden Figuren verwiesen.

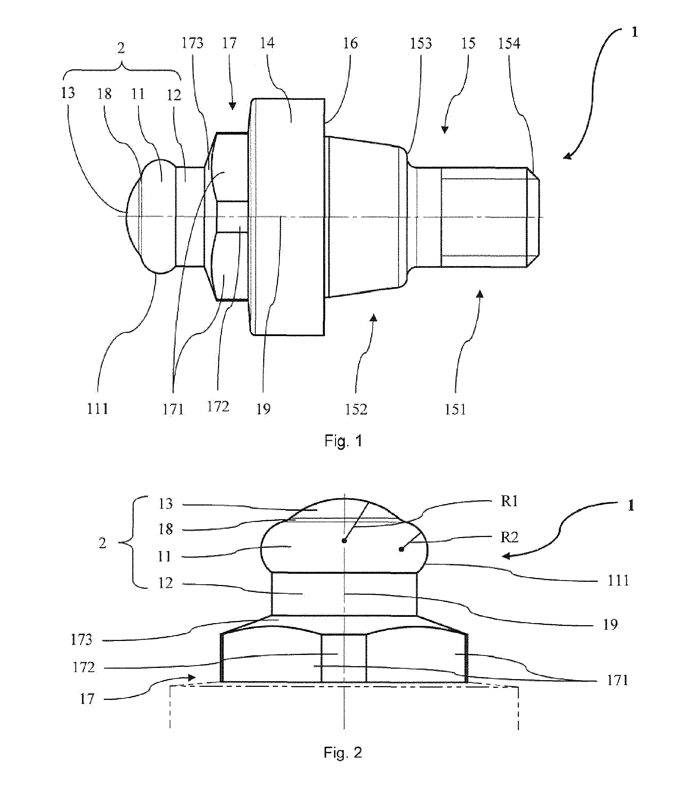

Fig. 1, Fig. 2 und Fig. 3 zeigen ein erstes Ausführungsbeispiel eines einteiligen Abutments 1 mit einer zentralen Längsachse 19, das eine Patrize 2 und eine Befestigungsstruktur mit einem Schraubenabschnitt 15, der einen Zwischenabschnitt 152 außengewinde und einen axial daran anschliessenden Gewindeabschnitt 151 mit Aussengewinde aufweist, umfasst. Das Aussengewinde des Gewindeabschnitts 151 ist einem Innengewinde eines zugehörigen Implantats entsprechend ausgestaltet. Der Zwischenabschnitt 152 schliesst an seinem dem Gewindeabschnitt 151 abgewandten Längsende an einen kreiszylindrischen Gingivahöhenabschnitt 14 an. Der Zwischenabschnitt 152 ist vom Gingivahöhenabschnitt 14 zum Gewindeabschnitt 151 hin verjüngend ausgestaltet. Der Gingivahöhenabschnitt 14 überragt den ersten Bereich des Zwischenabschnitts 151 von der Längsachse 19 des Abutments 1 nach aussen hin also in distaler Richtung, so dass eine rechtwinklig zur Längsachse 19 liegende ebene Fläche 16 einen Anschlag bildet, Entgegen dem Gingivahöhenabschnitt 14 geht der Zwischenabschnitt 152 über eine gebogene weitere Anschlagfläche 153 axial in den Gewindeabschnitt 151 des Schraubenabschnitts 15 über. Der Gewindeschnitt 151 endet an seinem der Patrize 2 abgewandten Ende in einem konisch zulaufenden Endbereich 154.

An seinem dem Schraubenabschnitt 15 abgewandten Ende schliesst der Gingivahöhenabschnit 14 axial über einen Schüsselansetzabschnitt 17 an die Patrize 2 des Abutments 1 an. Der Schlüsselansetzabschnitt 17 weist eine für das Ansetzen eines Vierkantschlüssels geeignete Form auf. Insbesondere umfasst der Schlüsselansetzabschnitt 17 vier dem Umfang des Schlüsselansetzabschnitts 17 entlang und rechtwinklig zueinander angeordnete ebene Angreifflächen 171, von denen jeweils zwei über eine gebogene Verbindungsfläche 172 miteinander verbunden sind. Als Übergang zur Patrize 2 weist der Schlüsselansetzabschnitt 17 einen konischen Übergangsbereich 173 auf, der sich von den Angreifflächen 171 zur Patrize 2 hin verjüngt.

Die Patrize 2 umfasst einen an den Übergangsbereich 173 des Schlüsselansetzabschnitts 17 angrenzenden kreiszylindrischen Körperabschnitt 12, der wiederum an seinem dem Schfüssetansetzabschnitt 17 abgewandten Ende in einen Einschnappabschnitt 11 übergeht. Der Einschnappabschnitt 11 weist eine von der Längsachse 19 des Abutments 1 entlang der Längsachse 19 konvex nach aussen beziehungsweise distal gekrümmte Aussenfläche 111 mit einem Krümmungsradius R2 auf. Die Aussenfläche 111 überragt von der Längsachse des Abutments aus nach aussen beziehungsweise distal im Wesentlichen vollständig die Aussenfläche des Körperabschnitts 12. Der Einschnappabschnitt 11 geht an seinem dem Körperabschnitt 12 abgewandten Ende über einen konkaven Zwischenabschnitt 18 in ein kugelsegmenüörmiges Kopfende 3 mit einem Krümmungsradius R1 über. Der Krümmungsradius R1 des Kopfendes 13 ist etwa drei Mal so gross wie der Krümmungsradius R2 der Aussenfläche 111 des Einschnappabschnitts 11. Der Körperabschnitt 12, der Einschnappabschnitt 11, der Zwischenabschnitt 18 und das Kopfende 13 bilden zusammen die Patrize 2.

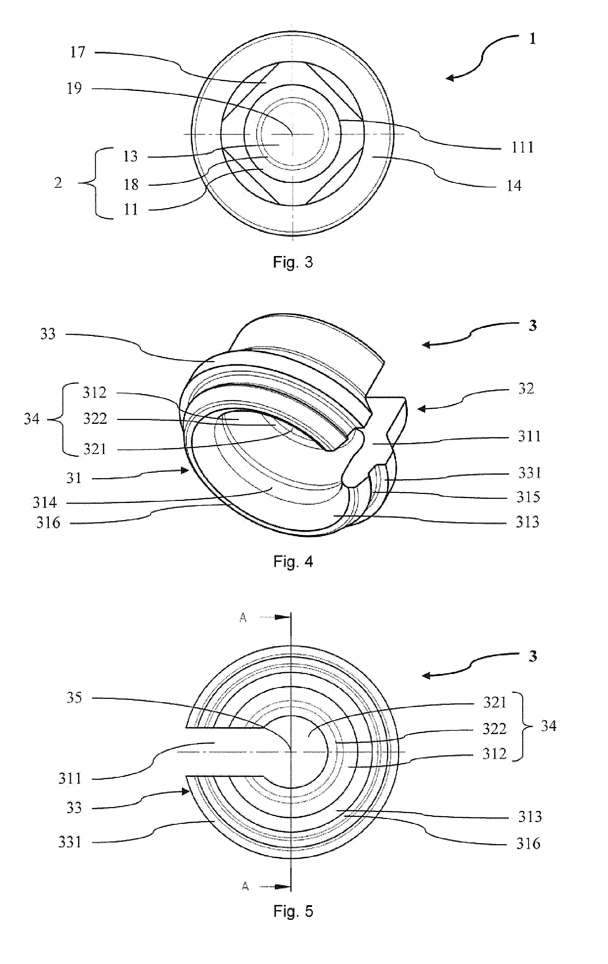

In Fig. 3 ist das Abutment 1 in einer Aufsicht gezeigt. Darin ist insbesondere ersichtlich, dass die vier Angreifflächen 171 des Schlüsselansetzabschnihs 17 jeweils in einem rechten Winkel zu den benachbarten Angreifflächen 171 angeordnet und über eine der gebogene Verbindungsflächen 172 mit einem der benachbarten Angreifflächen 171 verbunden sind. So beschreibt der Querschnitt des Schlüsselansetzabschnitts 17 einen Vierkant, wobei die Angreifflächen 171 in einem rechten Winkel zueinander stehen und wobei die Längsachse 19 des Abutments 1 den Mittelpunkt des Hexagons bilden. Der Schlüsselansetzabschnitt 17 überragt die Patrize 2 von der Längsachse 19 aus nach aussen hin also in distaler Richtung.

Das Abutment 1 ist vollständig aus Titan hergestellt, wobei alternativ dazu auch ein anderes biokompatibles Material möglich ist. Der Durchmesser des grössten rechtwinklig zur Längsachse 19 liegenden Querschnitts des Einschnappabschnitts 11 hat eine Länge von 2.1 mm bis 2.7 mm und insbesondere von 2.3 mm. Der grösste Durchmesser des rechtwinklig zur Längsachse 19 liegenden Querschnitts des Schlüsselansetzabschnits 17 hat eine Länge von 3.1 mm bis 3.7 mm und insbesondere von 3.4 mm. Der Abstand von den jeweils zwei parallelen Angreifflächen 171 beträgt zwischen 2.5 mm und 3.1 mm und insbesondere 2.8 mm. Die Patrize 2 hat eine Gesamthöhe von zwischen 3 mm und 3.8 mm und insbesondere von 3.4 mm. Der Krümmungsradius R1 des kugelsegmentförmigen Kopfendes 13 hat eine Länge von zwischen 1 mm und 1.4 mm und insbesondere von 1.2 mm. Der Krümmungsradius R2 der Aussenfläche 111 des Einschnappabschnitts 11 hat eine Länge von zwischen 0.3 mm und 0.5 mm und insbesondere von 0.4 mm.

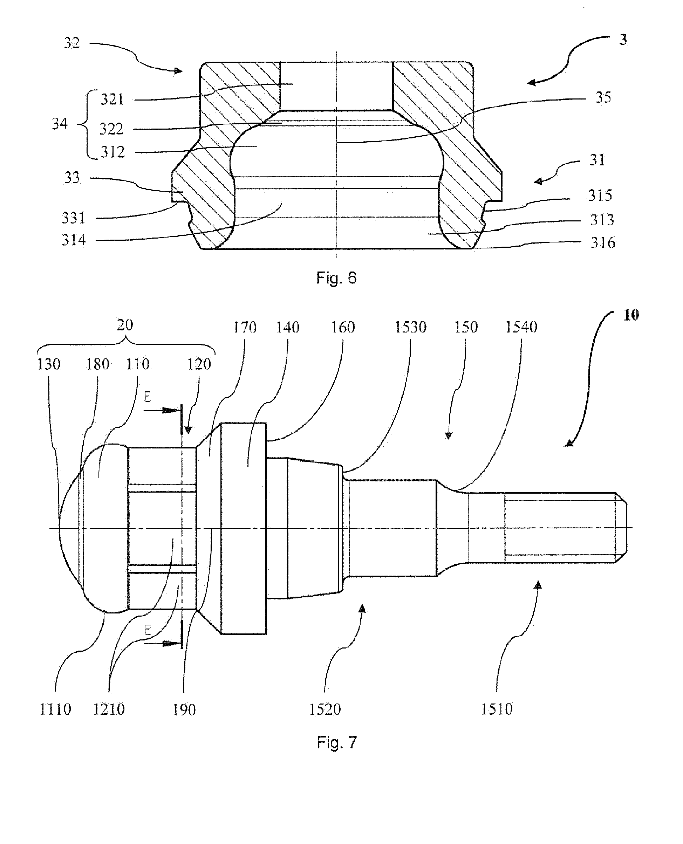

Fig. 4 zeigt ein erstes Ausführungsbeispiel eines erfindungsgemäßen, zu der Patrize 2 des Abutments 1 der vorangehenden Fig. passenden Retentionseinsatzes 3 in einer perspektivischen Ansicht. Fig. 5 zeigt eine Ansicht von unten an den gleichen Retentionseinsatz 3 und Fig. 6 eine Schnittansicht des gleichen Retentionseinsatzes 3. Der im Wesentlichen topfförmige Retentionseinsatz 3 mit einer zentralen Achse 35 umfasst eine im Wesentlichen kreisscheibenförmige Endseite 32 mit einer zentralen kreisrunden Öffnung 321 als ersten Bereich und einen angewinkelt am Umfang davon abstehenden im Wesentlichen ringförmigen Retentionsrand 31. Der Retentionsrand 31 ist von einem vertikalen Schlitz 311 durchbrochen, der sich bis zur Öffnung 321 des Retentionsrandes 32 erstreckt. Der Schlitz 311 ist senkrecht zur Endseite 32 angeordnet und gerade ausgestaltet.

Der Retentionsrand 31 weist eine Außenfläche und eine der Außenfläche entgegengesetzte Innenfläche, wobei die Innenfläche gegen das offene Ende des Retentionseinsatzes 3 also gegen das der Endseite 32 abgewandte Ende des Retentionseinsatzes 3 hin nach außen abgerundet ausgestaltet ist und somit einen entsprechenden gekrümmten Abschnitt 313 aufweist. Dabei weist die Innenfläche des Retentionsrandes 31 einen oberen nach innen gekrümmten konkaven ersten Bereich 312 mit einem positiven Krümmungsradius auf, der nach unten über einen leicht konvex gekrümmten Abschnitt in einen Verlängerungsbereich 314 übergeht. Der Verlängerungsbereich 314 hat eine ebene Innenseite, die im Wesentlichen die Form einer Innenseite eines Ringes hat. Nach oben geht der erste Bereich 312 des Retentionsrandes 31 wiederum über einen leicht konvex gekrümmten Abschnitt in einen dritten Bereich 322 der Endseite 32 mit einer sich nach oben konisch verjüngenden Innenfläche über. Der dritte Bereich 322 geht nach oben in die Öffnung 321 der Endseite 32 über. Der erste Bereich 311 des Retentionsrandes 31 bildet zusammen mit dem dritten Bereich 322 und der Öffnung 321 der Endseite 32 eine Fassung 34.

Am der Endseite 32 abgewandten Ende des Retentionsrandes 31 geht der nach außen gekrümmten Abschnitt 313 in einen ebenen Abschnitt 316 über, der das der Endseite 32 abgewandte Ende des Retentionseinsatzes 3 bildet. In Anwendung des Retentionseinsatzes 3 kann der ebene Abschnitt 316 dem apikalen Ende des Retentionseinsatzes 3 entsprechen.

Etwa in der Mitte des Retentionsrandes 31 ist ein radial von der Außenfläche des Retentionsrandes 31 abstehender riegelförmiger Vorsprung 33 beziehungsweise Balken ausgestaltet, der sich über den ganzen Umfang des Retentionsrandes 31 erstreckt. Der Vorsprung 33 umfasst eine ebene radiale Außenseite, eine rechtwinklig dazu ausgestaltete ebene Oberseite, die der Endseite 32 zugewandt ist, und eine der Oberseite entgegengesetzte ebene Unterseite, die der Endseite 32 abgewandte ist und die eine Vorsprungauflagefläche 331 definiert. Wie in Fig. 5 gut ersichtlich ist, überragt der Vorsprung 33 den Rest des Retentionseinsatzes 3 radial nach außen hin.

In Richtung des der Endseite 32 abgewandten Endes des Retentionsrandes 31 ist eine Eingreifkerbe 315 benachbart zum Vorsprung 33 an der Außenfläche ausgebildet. Über die Eingreifkerbe 315 kann der Retentionseinsatz 3 über ein geeignetes Montagewerkzeug, wie es beispielsweise in der WO 2011/027229 A2 beschrieben ist, gehalten werden. Damit kann der Retentionseinsatz 3 auf bevorzugte Weise montiert und manipuliert werden.

Der Retentionseinsatz 1 ist vollständig aus Polyetheretherketon hergestellt, wobei alternativ dazu auch ein anderes biokompatibles polymeres oder nicht polymeres Material möglich ist. Der Krümmungsradius des ersten Bereichs 312 der Fassung 34 ist entsprechend dem Krümmungsradius R1 der Außenfläche 111 des Einschnappabschnitts 11 der Patrize 2 ausgestaltet und hat eine Länge von zwischen 0.3 mm und 0.5 mm und insbesondere von 0.4 mm. Die Öffnung 321 der Fassung 34 hat einen Durchmesser von zwischen 1.5 mm bis 1.7 mm und insbesondere von 1.6 mm. Der Verlängerungsbereich 314 hat eine Mächtigkeit beziehungsweise Höhe von zwischen 0.1 mm bis 0.5 mm oder 0.2 mm bis 0.4 mm und insbesondere von 0.3 mm.

In Anwendung des Abutments 1 zusammen mit dem Retentionseinsatz 3 wird zum einen das Abutment 1 beziehungsweise meist mehrere solche Abutments 1 über ein eingepflanztes Implantat mit einem Kieferknochen fest verbunden. Parallel dazu wird eine Prothesenkonstruktion so vorbereitet, dass Öffnungen beziehungsweise Sacklöcher an der oder den Stellen der Prothesenkonstruktion vorgesehen sind, an denen die Prothesenkonstruktion mittels einer oder mehrerer Matrizen mit dem oder den Abutment(s) 1 verbindbar sein soll. Auf die Patrizen 2 der Abutments 1 werden dann die Retentionseinsätze 3 und passende Matrizengehäuse aufgesetzt. Dabei ermöglicht die Geometrie der Patrizen 2 insbesondere mit ihren konkaven Zwischenabschnitten 18 und die Geometrie der Retentionseinsätze 3 insbesondere mit deren Fassungen 34, dass die Retentionseinsätze 3 in vorbestimmter Ausrichtung und Position ausreichend auf den Patrizen 2 gehalten werden und dass ein unbeabsichtigtes Verkippen der Retentionseinsätze 3 auf den Patrizen 2 vermieden oder zumindest eingeschränkt werden kann. Die Patrizen 2 üben somit jeweils eine Eigenzentrierfunktion auf die zugehörige Matrize beziehungsweise deren Retentionseinsatz 3 aus. Insbesondere wird durch die Geometrie der Patrizen 2 jeweils der zugehörige Retentionseinsatz 3 bei einer Verkippung vorgespannt, so dass er automatisch wieder in die erwähnte bevorzugte vorbestimmten Ausrichtung beziehungsweise Position bewegt wird, sobald er den notwendigen Freiraum dazu erhält. In dieser bevorzugten vorbestimmten Ausrichtung beziehungsweise Position können die Patrizen 2 dann in den Öffnungen der Prothesenkonstruktion angeordnet werden und die Matrizengehäuse können beispielsweise über Auspolymerisierung der Öffnungen der Prothesenkonstruktion fest mit der Prothesenkonstruktion verbunden werden.

Im täglichen Gebrauch der Abutments 1 und der Retentionseinsätze 3 ermöglicht die Geometrie der Patrizen 2 der Abutments 1 und der Fassungen 34 der Retentionseinsätze 3, dass ein verhältnismässig starkes Kippen der Matrizen auf den Patrizen 2 möglich ist. Insbesondere geben die jeweiligen Verlängerungsabschnite 314 der Retentionseinsätze 3 zusätzliche Freiraum für eine solche Kippbewegung.

Auch ermöglicht die kugelsegmentförmige Form der Patrizen 2 der Abutments 1, dass beim Aufsetzen der an der Prothesenkonstruktion montierten Matrizen die Prothesenkonstruktion einfach und auf verhältnismässig sanfte Weise genau positioniert werden kann, so dass ein komfortables Einsetzen der Prothesenkonstruktion möglich ist und beispielsweise durch Ecken oder Kanten des Kopfendes verursachte Beschädigungen an den Matrizen vermieden werden können. Zudem bewirkt die Ausgestaltung der Patrizen 2, dass deren Kopfenden 13 verhältnismässig weit axial beabstandet von der den Körperabschniten 12 entgegengesetzten Seiten der Einschnappabschnitte 11 angeordnet ist. Dadurch liegen die Kopfenden 13 der Patrize 2 im Vergleich zu ihren Einschnappabschnitten 11 erhöht, das heisst sie erstrecken sich weiter in den Mundinnenraum eines Patienten. Auf diese Weise können sich die Kopfenden 13 im Vergleich zu den Einschnappabschnitten 11 weiter vom Zahnfleisch abheben, so dass sich die Patrizen 2 vor einem Einsetzen der Prothesenkonstruktion verhältnismässig leicht und eindeutig lokalisieren lässt.

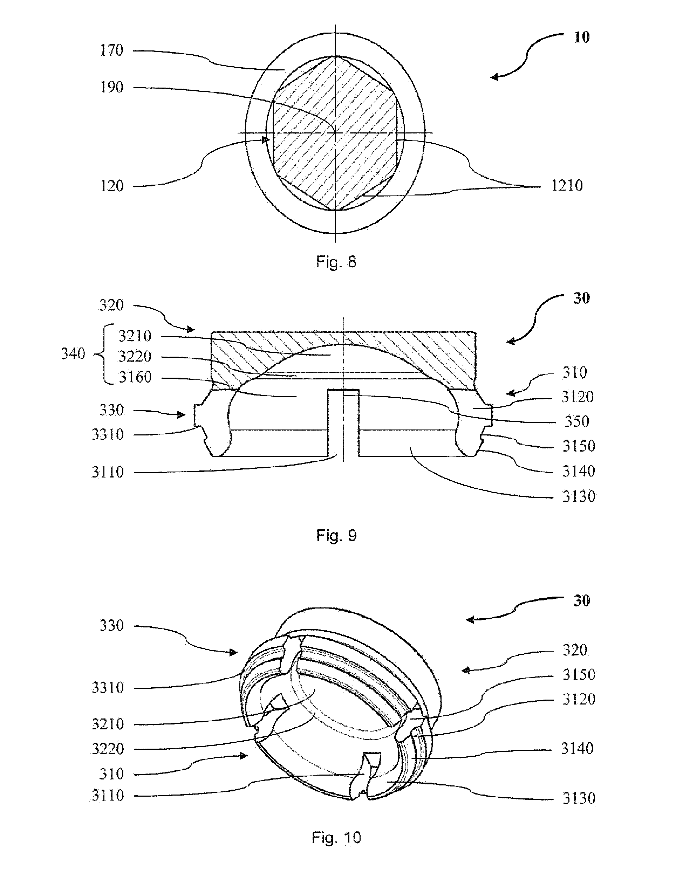

Fig. 7 und Fig. 8 zeigen ein zweites Ausführungsbeispiel eines einteiligen Abutments 10, das ähnlich wie das Abutment der Fig. 1, Fig. 2 und Fig. 3 mit einer zentralen Längsachse 190, einer Patrize 20, einem Gingivahöhenabschnitt 140, und einem Schraubenabschnitt 150 ausgestaltet ist. Der Schraubenabschnitt 150 umfasst einen Zwischenabschnitt 1520 mit einer ersten Anschlagfläche 1530 und einer zweiten Anschlagfläche 1540 und einen Gewindeabschnitt 1510. Zwischen dem Schraubenabschnitt 150 und dem Gingivahöhenabschnitt 140 ist eine rechtwinklig zur Längsachse 190 liegende ebene Fläche 160 als Anschlag gebildet.

Die Patrize 20 des Abutments 10 umfasst eine axial an einen kreiskegelstumpfförmigen Übergangsabschnitt 170 angrenzenden hexagonzylindrischen Körperabschnitt 120, der wiederum an seinem dem Übergangsabschnitt 170 abgewandten Ende in einen Einschnappabschnitt 110 übergeht. Die Aussenfläche des Körperabschnitts 120 ist aus sechs in einem 60°-Winkel zueinander stehenden rechteckigen Angreifflächen 1210 gebildet.

Der Einschnappabschnit 110 weist eine von der Längsachse 190 des Abutments 10 entlang der Längsachse 190 konvex nach aussen also distal gekrümmte Aussenfläche 110 auf. Die Aussenfläche 110 überragt von der Längsachse 190 des Abutments 10 aus nach aussen also in distaler Richtung im Wesentlichen vollständig die Aussenfläche des Körperabschnitts 120. Der Einschnappabschnit 110 geht an seinem dem Körperabschnitt 120 abgewandten Ende über einen Zwischenabschnitt 180 mit konkav gekrümmter Aussenfläche in ein kugelsegmenJörmiges Kopfende 130 über.

Das Abutment 10 ist vollständig aus Titan hergestellt, wobei alternativ dazu auch ein anderes geeignetes biokompatibles Material möglich ist. Der Einschnappabschnitt 110 weist einen größeren Durchmesser des grössten rechtwinklig zur Längsachse 190 liegenden Querschnitts auf als der Einschnappabschnitt 11 des Abutments 1 von Fig. 1, Fig. 2 und Fig. 3 und ist in etwa so dimensioniert wie die Einschnappabschnitte herkömmlich bekannter analoger Druckknopfverbindungen. Das heisst, er liegt in einem Bereich von etwa 3.8 mm bis etwa 4 mm und insbesondere von etwa 3.9 mm.

Fig. 10 und Fig 11 zeigen ein für den Einsatz mit dem Abutment 10 von Fig. 7 und Fig. 8 geeigneten, erfindungsgemässen Retentionseinsatz 30 mit einer Mittelachse 350. Der Retentionseinsatz 30 umfasst eine Endseite 320 und einen Retentionsrand 310 mit einer Aussenfläche 3140, vier Ausnehmungen 310 und Lamellenabschnitten 3120. Weiter weist der Retentionseinsatz 30 einen ziegelförmigen Vorsprung 330 mit einer ebenen radialen Aussenseite, einer rechtwinklig dazu ausgestaltete ebenen Oberseite und einer rechtwinklig dazu ausgestaltete ebenen Unterseite, die eine Vorsprungauflagefläche 3310 beschreibt. Ebenfalls ist unterhalb des Vorsprungs 330 eine Einhängrille 3150 ausgestaltet.

Die Lamellenabschnitte 3120 weisen eine Innenfläche 3160 als ersten Bereich einer Fassung 340 auf, die eine der Aussenfläche 3140 entgegengesetzte Innenfläche des Retentionsrandes 310 beschreiben. Die Innenflächen 3160 der Lamellenabschnitte 3120 sowie ein konkaver Zwischenabschnitt 3220 als dritter Bereich der Fassung 340 und eine kugelsegmentförmige Innenfläche 3210 der Endseite 320 als zweiter Bereich der Fassung 340 sind zusammen korrespondierend zu der Aussenfläche des Einschnappabschnitts 110, des Auflageabschnitts 180 und der Endseite 130 also der Patrize 20 des Abutments 10 ausgestaltet. Zudem sind die Innenflächen 3160 der Lamellenabschnitte 3120 gegen das offene Ende des Retentionseinsatzes 30 also gegen das der Endseite 320 abgewandte Ende des Retentionseinsatzes 30 hin nach aussen abgerundet ausgestaltet und weisen somit einen entsprechenden gekrümmten Abschnitt 3130 auf.

Im Betrieb kann der Retentionseinsatz 30 analog zu den in der WO 2011/027229 A2 beschriebenen Retentionseinsätzen zusammen mit einer entsprechenden Halteschale zum Verbinden einer Prothesenkonstruktion mit dem Abutment 10 vorteilhaft verwendet werden. Zudem ermöglicht der Zwischenabschnitt 3220 des Retentionseinsatzes 30, dass der Retentionseinsatz 30 bestimmungsgemäss mit einem herkömmlichen Abutment, das wie beispielsweise in der WO 2010/025034 A1 beschrieben eine Öffnung an seinem Kopfende aufweist, verwendet werden kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternative von Ausführungsformen und einzelne Alternativen deren Merkmale vom Erfindungsgegenstand beziehungsweise von den offenbarten Gegenstandes ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche weitere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schrift erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Patrize (2; 20) zur reversibel lösbaren Verbindung einer dentalen Prothesenkonstruktion mit einem Kieferknochen, welche Patrize (2; 20) mit einer Befestigungsstruktur ausgebildet ist, über die die Patrize (2; 20) am Kieferknochen, an einem im Kieferknochen eingepflanzten Implantat, an einem Zahnstumpf oder an einem Nachbarzahn befestigbar ist, umfassend:
einen Körperabschnitt (12; 120) mit einer einer Mantelfläche eines Zylinders entsprechenden Aussenfläche, wobei die Mittelachse des Zylinders eine Längsachse (19; 190) der Patrize (2; 20) definiert;
einen in Bezug auf die Längsachse (19; 190) der Patrize (2; 20) zum Körperabschnitt (12; 120) axial versetzten Einschnappabschnit (11; 110), der eine entlang der Längsachse (19; 190) konvex gekrümmte Aussenfläche umfasst, die die Außenfläche des Körperabschnitts (12; 120) von der Längsachse (19; 190) der Patrize (2; 20) aus nach aussen überragt; und
ein die Patrize (2; 20) in Bezug auf seine Längsachse (19; 190) axial abschliessendes Kopfende (13; 130),
wobei der Einschnappabschnitt (11; 110) näher beim Kopfende (13; 130) angeordnet ist als der Körperabschnitts (12; 120),
**dadurch gekennzeichnet, dass**
zwischen der konvex gekrümmten Aussenfläche des Einschnappabschnitts (11; 110) und dem Kopfende (13; 130) ein konkaver Zwischenabschnitt (18; 180) angeordnet ist.

2. Patrize (2; 20) nach Anspruch 1, bei der der Zwischenabschnitt (18; 180) der Patrize (2; 20) eine konkav gekrümmte Aussenfläche aufweist.

3. Patrize (2; 20) nach Anspruch 1 oder 2, bei dem das Kopfende (13; 130) der Patrize (2; 20) vollständig konvex gekrümmte und geschlossen ausgestaltet ist.

4. Patrize (2; 20) nach Anspruch 3, bei dem das Kopfende (13; 130) der Patrize (2; 20) einem Segment einer Kugelfläche entspricht.

5. Patrize (2: 20) nach Anspruch 4, bei der das Segment der Kugelfläche des Kopfendes einen ersten Krümmungsradius (R1) aufweist und die konvex gekrümmten Aussenfläche des Einschnappabschnitts einen zweiten Krümmungsradius (R2), wobei der erste Krümmungsradius (R1) grösser ist als der zweite Krümmungsradius (R2).

6. Patrize (2; 20) nach Anspruch 5, bei der der erste Krümmungsradius (R1) etwa zwei bis etwa vier Mal grösser ist als der zweite Krümmungsradius (R2) und insbesondere etwa drei Mal grösser.

7. Abutment zur Verbindung einer dentalen Prothesenkonstruktion mit einem Kieferknochen, umfassend:
eine Patrize (2; 20) nach einem der vorangehenden Ansprüche; und
eine Befestigungsstruktur (15; 150), über die das Abutment am Kieferknochen oder an einem im Kieferknochen eingepflanzten Implantat befestigbar ist.

8. Abutment nach Anspruch 7, bei dem die Befestigungsstruktur (15; 150) einen sich vom Kopfende (13; 130) der Patrize (2; 20) weg erstreckenden Schraubenabschnitt (15; 150) aufweist, an dem zumindest teilweise ein Aussengewinde ausgebildet ist.

9. Abutment nach Anspruch 8, bei dem die Befestigungsstruktur (15; 150) einen zwischen dem Schraubenabschnitt (15; 150) und der Patrize (2; 20) angeordneten Schlüsselansetzabschnitt (17; 120) umfasst.

10. Retentionseinsatz (3; 30) zum Aufschnappen auf einen Einschnappabschnitt (11; 110) einer Patrize (2; 20) gemäss einem der Ansprüche 1 bis 6, der eine Endseite (32; 320) und einen davon abstehenden zumindest teilweise ringförmigen Retentionsrand (31; 310) aufweist, wobei die Endseite (32; 320) und der davon abstehende Retentionsrand (31; 310) eine Fassung (34; 340) bilden, die einen korrespondierend zur Aussenfläche des Einschnappabschnitts (11; 110) der Patrize (2; 20) ausgestalteten konkaven ersten Bereich (312; 3160), einen zur Aufnahme des Kopfendes (13; 130) der Patrize (2; 20) ausgestalteten zweiten Bereich (321; 3210) und einen zwischen dem ersten Bereich (312; 3160) und dem zweiten Bereich (321; 3210) ausgestalteten dritten Bereich (322; 3220) umfasst.

11. Retentionseinsatz (3; 30) nach Anspruch 11, bei dem der zweite Bereich (321; 3210) der Fassung (34; 340) als durchgehende Öffnung in der Endseite (32; 320) ausgestaltet ist.

12. Retentionseinsatz (3; 30) nach Anspruch 11 oder 12, bei dem der dritte Bereich (322; 3220) der Fassung (34; 340) eine konische Innenfläche aufweist, die vom ersten Bereich (312; 3160) der Fassung (34; 340) zum zweiten Bereich (321; 3210) der Fassung (34; 340) hin verjüngt.

13. Retentionseinsatz (3; 30) nach einem der Ansprüche 11 bis 13, bei dem der Retentionsrand (31; 310) einen Verlängerungsbereich (314) aufweist, der entgegen dem dritten Bereich (322; 3220) der Fassung (34; 340) an den ersten Bereich (312; 3160) der Fassung (34; 340) anschliesst.

14. Retentionseinsatz (3; 30) nach Anspruch 14, der eine Mittellängsachse (35; 350) umfasst, wobei ein Durchmesser eines maximalen senkrecht zur Mittellängsachse (35; 350) angeordneten Querschnitts des ersten Bereichs (312; 3160) eine Länge von zwischen etwa sechs bis etwa vierzehn, vorzugsweise zwischen etwa acht bis etwa zwölf und insbesondere etwa zehn Mal der Mächtigkeit des Verlängerungsbereichs (314) aufweist.

15. Verbindungseinrichtung, die eine Patrize (2; 20) gemäss einem der Ansprüche 1 bis 6 und einen Retentionseinsatz (3; 30) gemäss einem der Ansprüche 11 bis 15 umfasst, wobei der dritte Bereich (322; 3220) des Retentionseinsatzes (3; 30) zumindest teilweise beabstandet vom Zwischenabschnitt (18; 180) der Patrize (2; 20) angeordnet ist, wenn der Retentionseinsatz (3; 30) auf die Patrize (2; 20) aufgeschnappt ist und keine äussere Kraft auf den Retentionseinsatz (3; 30) und/oder die Patrize (2; 20) wirkt.
